# FASCICULE DE BREVET EUROPEEN

(11) **EP 2 379 304 B1**
(45) Date de publication et mention de la délivrance du brevet: **26.09.2012**
(21) Numéro de dépôt: 09796765.7
(22) Date de dépôt: 01.12.2009
(51) Int. Cl.: B29C 49/48, B29C 49/78

(54) **PROCEDE ET DISPOSITIF DE FORMAGE DES RECIPIENTS AVEC CONTRE-PRESSION LOCALISEE**
VERFAHREN UND VORRICHTUNG ZUR HERSTELLUNG VON BEHÄLTERN MIT GEGENDRUCK
METHOD AND DEVICE FOR FORMING CONTAINERS WITH COUNTER-PRESSURE

(30) Priorité: 03.12.2008 FR 0806799
(43) Date de publication de la demande: 26.10.2011
(73) Titulaire: Sidel Participations, 76930 Octeville sur Mer (FR)
(72) Inventeur: CHOMEL, Nicolas, F-76930 Octeville sur Mer (FR); LANGLOIS, Jean-Christophe, F-76930 Octeville sur Mer (FR); TONGA, Jules, F-76930 Octeville sur Mer (FR)
(74) Mandataire: Demulsant, Xavier
(86) Numéro de dépôt international: PCT/FR2009/001364
(87) Numéro de publication internationale: WO 2010/063900

(56) Documents cités:
- EP-A- 0 888 864
- WO-A-2007/020346
- US-A- 4 123 217

## Description

L'invention a trait au formage des récipients à partir d'ébauches en matière thermoplastique, et plus précisément au formage des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Certains récipients peuvent être munis de réserves en creux formées en saillie vers l'intérieur du récipient et réalisées dans un but esthétique (par ex. création de galbes), structurel (par ex. réalisation de panneaux destinés à absorber la déformation du récipient lors d'un remplissage à chaud) ou fonctionnel (réalisation d'une poignée de préhension du récipient).

**II** existe plusieurs techniques pour former une réserve en creux sur un récipient, voir par exemple le brevet US 4 123 217.

Une première technique consiste à employer un moule muni d'un insert mobile initialement escamoté dans la paroi du moule et déployé en présence du récipient en cours de formation dans le moule pour repousser la matière lorsque celle-ci atteint la paroi, comme cela est illustré dans les demandes de brevet européen EP 1 922 256 (SIDEL) ou EP 346 518 (TOAGOSEI).

Un inconvénient de cette technique est lié à la régulation thermique du moule, à laquelle on recourt généralement pour initier le refroidissement du récipient avant même son éjection du moule.

En effet, ce refroidissement de la matière rend plus difficile sa déformation lorsque l'insert est déployé. En particulier, il peut arriver que la matière, insuffisamment déformée, n'épouse pas complètement la surface de l'insert. II peut en résulter certains défauts d'aspects qui justifient la mise au rebut du récipient.

Une deuxième technique consiste à former un récipient intermédiaire muni d'une excroissance en saillie vers l'extérieur du récipient, au moyen d'un moule muni d'un évidement pour former cette excroissance lors du soufflage du récipient. Le récipient intermédiaire ainsi formé est alors sorti du moule. Une étape supplémentaire consiste ensuite, par exemple au moyen d'une tige coulissante, à repousser l'excroissance pour la retourner, de sorte à former une réserve en creux en saillie vers l'intérieur du récipient. Cette technique est notamment illustrée dans la demande internationale WO 2006/01433.

Cette technique paraît remédier aux inconvénients précités de la première technique décrite ci-dessus, car pour l'essentiel la réserve en creux est formée en même temps que le reste du récipient, ce qui facilite la déformation de la matière lors du soufflage. Toutefois, elle ne va pas non plus sans inconvénients. En effet, le récipient intermédiaire subit, d'abord au contact du le moule et ensuite à la sortie de celui-ci, un refroidissement qui provoque sa rigidification. Ainsi rigidifiée, la matière oppose une certaine résistance au retournement de l'excroissance, ce qui peut provoquer des déformations a *minima* inesthétiques.

L'invention vise notamment à remédier aux inconvénients des techniques antérieures, en proposant une solution permettant d'améliorer la qualité de fabrication des récipients munis de réserves en creux.

À cet effet, l'invention propose un procédé de formage, dans un moule muni d'une paroi formant une cavité, d'un récipient à partir d'un récipient intermédiaire comprenant au moins une excroissance latérale en saillie vers l'extérieur du récipient, qui comprend :
- Une opération de boxage consistant à repousser l'excroissance latérale, au moyen d'un insert monté mobile par rapport au moule entre une position rétractée dans laquelle l'insert est escamoté dans un évidement formé dans la paroi et une position sortie dans laquelle l'insert s'étend en saillie par rapport à la paroi, pour former, par retournement, une réserve en creux en saillie vers l'intérieur du récipient ;
- Une opération de pressurisation du récipient intermédiaire, consistant, préalablement à l'opération de boxage, à injecter un fluide sous pression dans le récipient intermédiaire ;
- une opération de pressurisation locale consistant, préalablement à l'opération de boxage, à injecter un fluide sous pression dans un volume défini dans ledit évidement entre l'excroissance latérale et l'insert.

L'invention propose, en deuxième lieu, un dispositif pour le formage d'un récipient à partir d'un récipient intermédiaire comprenant au moins une excroissance latérale en saillie vers l'extérieur du récipient, ce dispositif comprenant :
- Un moule muni d'une paroi définissant une cavité ;
- Un insert de boxage monté mobile par rapport au moule entre une position rétractée dans laquelle l'insert est escamoté dans un évidement formé dans la paroi et une position sortie dans laquelle l'insert s'étend en saillie par rapport à la paroi, pour former, par retournement, une réserve en creux en saillie vers l'intérieur du récipient ;
- des moyens d'injection d'un fluide sous pression dans le récipient intermédiaire ;
- des moyens d'injection d'un fluide sous pression dans ledit évidement.

Ainsi, en maintenant une pression à l'intérieur du récipient, on gonfle celui-ci, qui se trouve ainsi plaqué contre le moule. On évite ainsi le décollement du récipient et les déformations de celui-ci induites par la traction exercée sur la matière par le retournement de l'excroissance lors du boxage.

Dans le même temps, la contre-pression localisée au niveau de l'évidement permet de minimiser, voire d'éviter, d'éventuelles déformations de l'excroissance, dues au gonflement induit par la pression régnant dans le récipient.

D'autres objets et avantages de l'invention apparaîtront à la lumière de la description faite ci-après en référence aux dessins annexés dans lesquels :
- la figure 1 est une vue en perspective éclatée montrant une unité de formage de récipients équipée d'un dispositif conforme à l'invention ;
- la figure 2 est une vue transversale en coupe de l'unité de formage de la figure 1, montrée dans une configuration ouverte lors du chargement d'un récipient intermédiaire ;
- la figure 3 est une vue similaire à la figure 2, montrant l'unité de formage dans une configuration fermée après chargement du récipient intermédiaire, et avant boxage de celui-ci ;
- la figure 4 est une vue en perspective en arraché, montrant partiellement l'unité de formage de la figure 3 ;
- la figure 5 est une vue similaire aux figures 2 et 3, montrant l'unité de formage dans une configuration de boxage du récipient ;
- la figure 6 est une vue partielle en coupe, faite dans un autre plan de coupe, montrant un détail de l'unité de formage de la figure 5 ;
- la figure 7 est une vue frontale en coupe, faite dans la platine, d'un module de boxage équipant l'unité de formage des figures précédentes ;
- la figure 8 est une vue transversale en coupe du module de boxage de la figure 7.

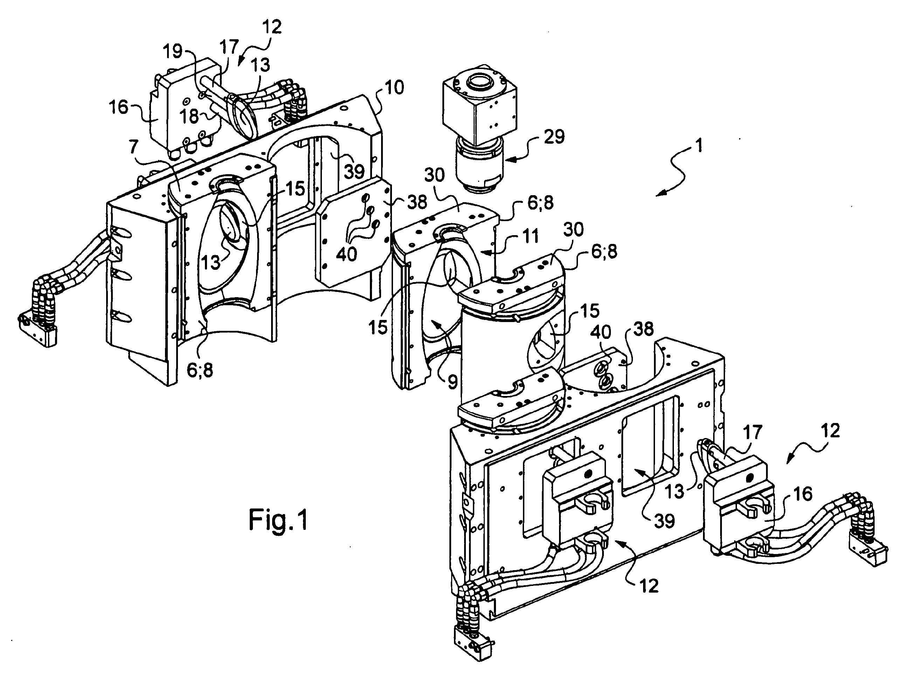

Sur la figure 1 est partiellement représentée une unité **1** de formage pour une machine de fabrication de récipients **2** à partir d'ébauches **3** en matière plastique, tel que PET (Polyéthylène téréphtalate). Le terme « ébauche » est employé ici pour désigner des récipients intermédiaires ayant subi une première série d'opérations dans un premier moule (par exemple un présoufflage) et destinés à subir une seconde série d'opérations dans un deuxième moule (par exemple un soufflage).

Le terme « formage » est employé ici pour désigner une opération de finition. En l'occurrence, l'unité **1** de formage ici représentée est configurée pour réaliser une opération de boxage sur des récipients **3** intermédiaires ayant subi des opérations de présoufflage et de soufflage. A l'issue de ces opérations, chaque récipient intermédiaire présente sur son corps deux excroissances **4** symétriques dont le boxage provoque le retournement vers l'intérieur du récipient **2,** et la formation subséquente de deux réserves **5** en creux constituant ensemble une poignée de préhension du récipient **2.**

Comme cela est représenté sur la figure 1, l'unité **1** de formage est du type linéaire et comprend une pluralité de moules **6** munis chacun d'une paroi **7** définissant une cavité destinée à recevoir une ébauche.

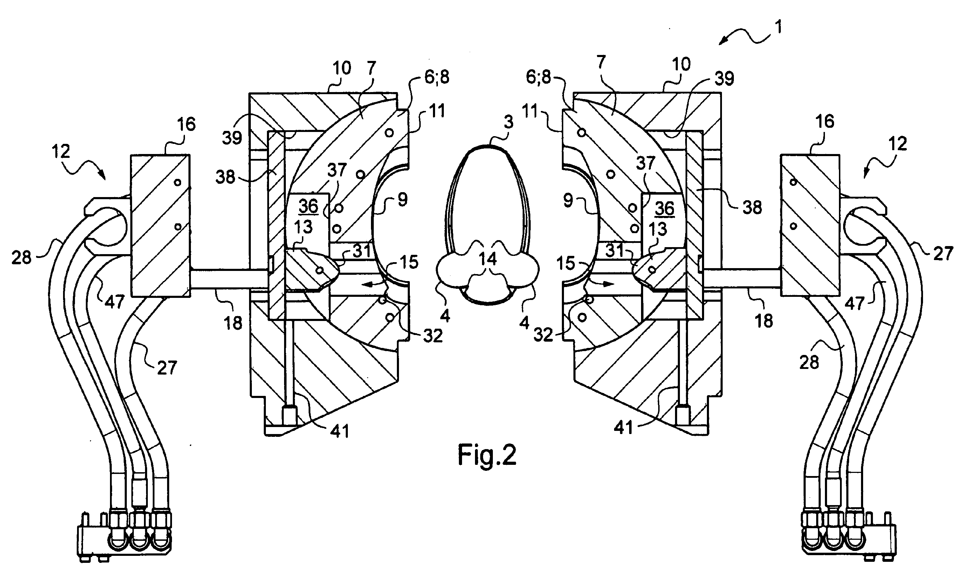

Plus précisément, chaque moule **6** comprend deux demi-moules **8,** munis chacun d'une demi-cavité **9.** Les demi-moules **8** sont montés en regard l'un de l'autre sur deux porte-moules **10** mobiles en translation horizontale par rapport à un bâti fixe (non représenté) de l'unité **1** de formage, suivant une direction transversale perpendiculaire à une direction longitudinale d'amenée des ébauches, entre :
- une position fermée dans laquelle les porte-moules **10** sont rapprochés, les demi-moules **8** étant en contact mutuel par un plan de joint **11** et les demi-cavités **9** formant conjointement la cavité du moule **6 ;**
- une position ouverte (illustrée sur la figure 2) dans laquelle les porte-moules **10** sont écartés l'un de l'autre pour permettre l'évacuation des récipients **2** et le chargement des ébauches **3.**

Pour une description plus précise de la cinématique, et d'une forme possible de réalisation d'un système de commande d'ouverture et de fermeture des moules **6,** on pourra se reporter à la demande de brevet européen n°EP 1 924 421 au nom de la demanderesse.

L'unité **1** de formage comprend en outre au moins un dispositif **12** de boxage. Ce dispositif **12** comprend un insert **13** de boxage prévu pour repousser la paroi de l'ébauche **3** au niveau de chaque excroissance **4** à la manière d'un poinçon, de sorte à former, par retournement autour d'une zone d'articulation ou charnière **14,** une réserve **5** en creux en saillie vers l'intérieur du récipient **2.**

En l'occurrence, l'unité **1** de formage, configurée pour accueillir deux ébauches **3,** comprend deux dispositifs **12** de boxage montés en vis-à-vis, prévus pour effectuer un boxage simultané de l'ébauche **3** de part et d'autre du plan de joint **11** et réaliser deux réserves **5** en creux symétriques formant ensemble une poignée. Chaque dispositif **12** de boxage comprend par conséquent deux inserts **13** de boxage montés en parallèle et se déplaçant simultanément.

Chaque insert **13,** réalisé dans un matériau thermiquement conducteur (c'est-à-dire présentant un coefficient de conductibilité thermique élevé, tel qu'un alliage d'aluminium) est monté mobile en translation par rapport au demi-moule **8** correspondant, entre une position rétractée dans laquelle l'insert **13** est escamoté dans la paroi **7,** et une position sortie dans laquelle l'insert **13** s'étend en saillie par rapport à la paroi **7.**

Afin de permettre le passage et le mouvement de l'insert **13,** chaque demi-moule **8** est muni d'un évidement **15** pratiqué transversalement et dont le contour correspond à la surface balayée par l'insert **13,** avec un jeu suffisant pour permettre une circulation d'air autour de l'insert **13,** pour des raisons qui seront expliquées ci-après.

Le dispositif **12** de boxage est conçu pour permettre un montage et un démontage rapide des inserts **13,** de sorte à permettre l'interchangeabilité des inserts **13** soit pour procéder à une réparation, soit dans le cadre de l'adaptation de l'unité **1** au formage de récipients de forme ou de capacité différente.

Outre l'insert **13,** chaque dispositif **12** de boxage comprend une platine **16** de forme sensiblement parallélépipédique, sur laquelle l'insert **13** est fixé de manière rigide par l'intermédiaire d'au moins deux tiges superposées, à savoir une tige **17** supérieure et une tige **18** inférieure ancrées dans une face antérieure de la platine **16.** Selon un mode de réalisation, une tige centrale **19** peut également être prévue, entre la tige **17** supérieure et la tige **18** inférieure.

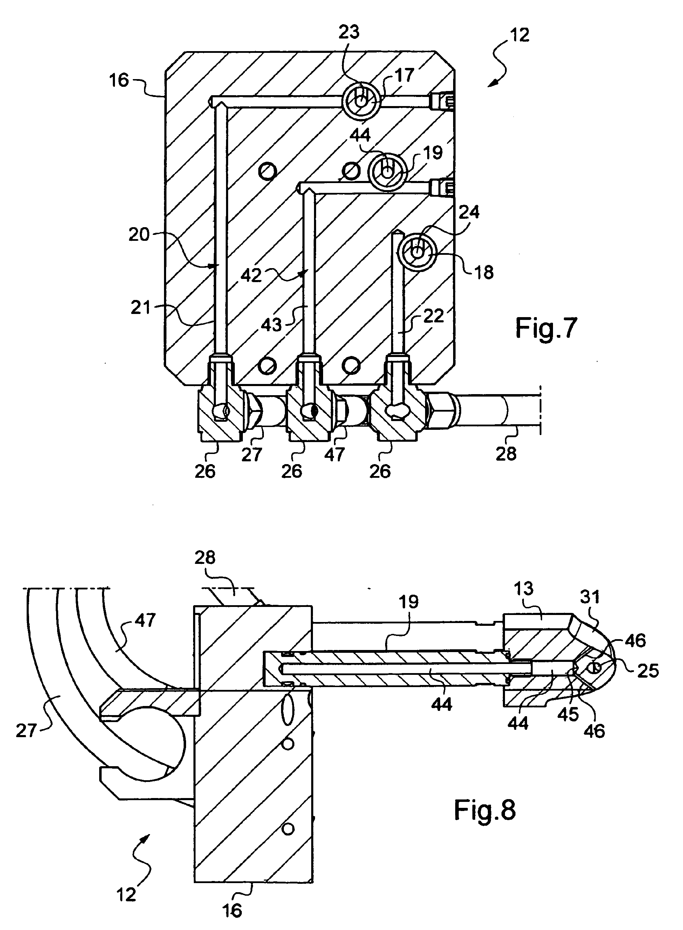

Comme cela est illustré sur la figure 7, le dispositif **12** de boxage est muni d'un circuit **20** de chauffe de l'insert **13,** qui comprend une canalisation **21** d'amenée de fluide caloporteur et une canalisation **22** d'évacuation du fluide, percées dans la platine **16** et raccordées à deux alésages **23, 24** pratiqués respectivement dans la tige **17** supérieure et dans la tige **18** inférieure et traversant l'insert **13.** Un conduit 25 ménagé dans l'insert **13** relie les alésages **23, 24** pour permettre la circulation du fluide et la chauffe de l'insert **13.**

Le fluide caloporteur est par exemple de l'eau portée à une température supérieure ou égale à la température de transition vitreuse de la matière constitutive du récipient **2** (soit environ 80°C pour le PET).

Les canalisations **21, 22,** s'ouvrent sur une face inférieure de la platine **16.** Des raccords **26,** vissés dans les ouvertures des canalisations **21, 22,** relient celles-ci respectivement à des tubulures **27, 28** souples d'amenée et d'évacuation du fluide caloporteur.

La chauffe de l'insert **13** permet à tout le moins de maintenir la température de l'ébauche **3,** au niveau de ses excroissances **4,** à une valeur élevée (aux environs de la température de transition vitreuse) où la matière est suffisamment malléable pour que le retournement des excroissances **4** soit aisé et que les contraintes exercées sur la matière n'entraîne pas de déformation intempestive du récipient **2.**

Afin d'éviter des déformations intempestives de l'ébauche **3** lors du boxage des excroissances **4,** qui pourrait provoquer un décollement de l'ébauche **3** de la paroi **7** du moule **6** compte tenu de la traction qui s'exerce sur la matière, l'unité de formage est équipée, à la manière d'une unité de soufflage, d'une tuyère cloche **29** qui, après introduction de l'ébauche **3** dans le moule **6** et fermeture de celui-ci, vient s'appliquer contre une face supérieure **30** du moule **6** pour mettre en communication l'intérieur de l'ébauche **3** avec une source de gaz sous pression. Le gaz est par exemple de l'air, à une pression comprise entre 10 et 30 bars, suivant la matière constitutive de l'ébauche **3** et sa température. Dans le cas d'une ébauche **3** en PET transférée rapidement (au maximum en quelques secondes) depuis une unité de soufflage située en amont, et dont la température est encore supérieure, voire sensiblement égale ou peu inférieure à la température de transition vitreuse, une pression relative de 15 bars est suffisante pour maintenir l'ébauche **3** plaquée contre la paroi **7** du moule 6 sans risque de décollement lors du boxage.

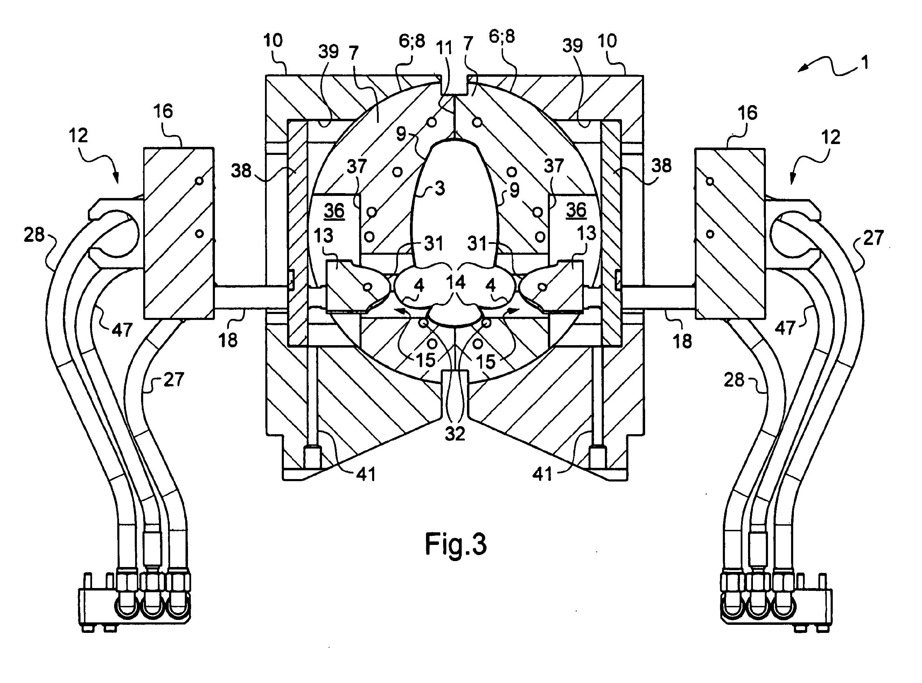

Cette pression est toutefois susceptible de déformer les excroissances, dont le profil bombé n'épouse ni la paroi de l'évidement **15** ni une surface **31** frontale de l'insert **13,** correspondant sensiblement à la contre-empreinte de la réserve **5** (cf. la figure **3****).** Afin d'éviter cela, l'unité de formage est équipée de moyens d'injection d'un fluide sous pression dans l'évidement **15,** en amont de l'insert (c'est-à-dire entre l'insert et l'excroissance **4** lorsque l'ébauche **3** est présente dans le moule **6.**

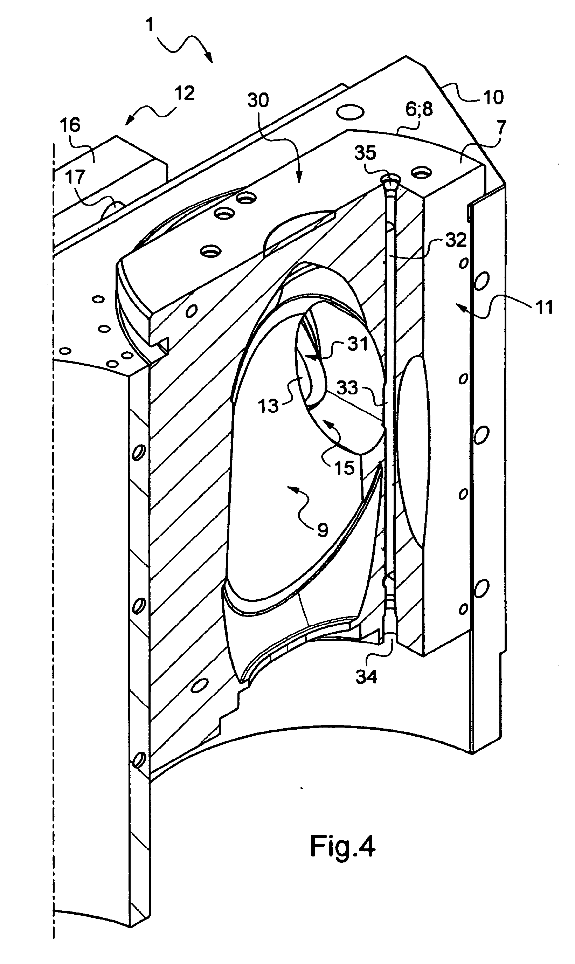

Suivant un mode de réalisation illustré sur la figure **4****,** ces moyens d'injection comprennent un alésage **32** percé dans la paroi **7** du demi-moule **8** et débouchant dans l'évidement **15.** En l'occurrence, cet alésage **32** s'étend sur toute la hauteur du demi-moule **8** et présente une portion centrale **33** qui débouche latéralement dans l'évidement **15,** au voisinage (et de préférence au plus proche) de la cavité **9,** de sorte à minimiser les pertes de charges.

L'alésage **32** est bouché à une extrémité **34** inférieure (le bouchon n'est pas représenté sur la figure 4) ; par une extrémité **35** supérieure, l'alésage **32** est relié à une source de fluide (de préférence un gaz) sous pression. Suivant un mode de réalisation, l'alésage **32** est relié à la même source de pression qui alimente la tuyère cloche **29,** de sorte à égaliser les pressions dans l'ébauche **3** et dans l'évidement **15** lors du boxage. Ce montage suppose l'interposition d'une électrovanne entre la source de pression et l'alésage **32.** Pour en faire l'économie, il peut être plus simple de prévoir un conduit de dérivation raccordant l'extrémité **35** supérieure de l'alésage **32** directement à la tuyère cloche **29,** de sorte que la mise sous pression de l'ébauche **3** et de l'évidement **15** se fait simultanément sans nécessiter la synchronisation de deux électrovannes distinctes, impliquant une prise en compte de leurs temps de réponse respectifs.

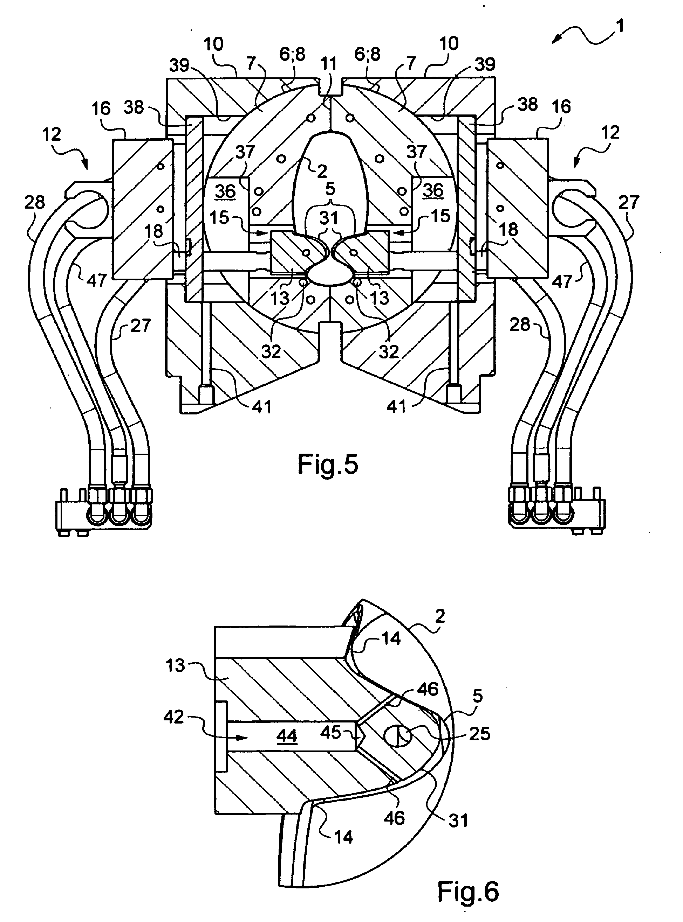

Selon un mode de réalisation préféré, illustré sur les figures 4 et 5, l'évacuation du gaz injecté dans l'évidement s'effectue par le porte-moule **10,** dans lequel est ménagée, derrière le demi-moule **8,** une chambre **36** de compensation formée par un évidement creusé dans le porte-moule **10** au-delà de l'empreinte cylindrique correspondant à une face **37** arrière du demi-moule **8.**

Cette chambre **36** de compensation est fermée de manière étanche, à l'opposé du demi-moule **8,** par une plaque **38** qui obture une fenêtre **39** pratiquée dans le demi-moule **8** pour permettre l'accès manuel frontal au dispositif **12** de boxage.

Cette plaque **38** comprend trois perçages **40** superposés dans lesquels les tiges **16, 17, 18** sont montées coulissantes pour permettre le mouvement de translation du dispositif **12** de boxage. L'étanchéité du passage des tiges **16, 17, 18** au travers des perçages **40** peut être assurée au moyen de joints dynamiques à lèvres montés dans des lamages formés dans la plaque **38** autour de chaque perçage **40.**

La chambre **36** de compensation est délimitée, en regard de la plaque **38,** par la face **37** arrière du porte-moule **8.**

Le gaz sous pression présent dans l'évidement **15** et dans la chambre **38** de compensation (qui communique avec la partie de l'évidement **15** située en amont de l'insert **13** par le jeu ménagé autour de l'insert **13)** peut être évacué vers l'extérieur via une canalisation **41** percée transversalement dans le porte-moule **10** et débouchant dans la chambre **36,** comme cela est illustré sur la figure 5. Cette canalisation **41** est avantageusement raccordée à un silencieux (non représenté) disposé à l'extérieur du porte-moule **10** et permettant d'absorber au moins pour partie les bruits dus à la décompression de la chambre **36.**

On peut résumer le procédé de formage des récipients, par mise en oeuvre de l'unité **1** de formage qui vient d'être décrite, de la manière suivante.

Le récipient **3** intermédiaire est d'abord chargé dans le moule **6,** en position ouverte et avec les inserts en position rétractée (figure 2). Le moule **6** est ensuite fermé, les inserts **13** étant maintenus en position rétractée. La forme générale du récipient **3** intermédiaire correspond à la cavité du moule **6,** les excroissances **4** étant toutefois reçues dans les fenêtres **15** en regard des inserts **13,** à faible distance de ceux-ci. On commande alors simultanément :
- la pressurisation de l'ébauche **3** (préalablement à l'opération de boxage), par injection d'air sous pression via la tuyère-cloche **29 ;**
- la pressurisation locale de l'évidement **15,** par injection d'air sous pression entre l'insert **13** et l'excroissance **4** via l'alésage **32.**

Comme nous l'avons vu, la contre-pression prévue dans l'évidement **13** permet d'équilibrer les pressions de part et d'autre de l'excroissance **4,** de sorte à éviter toute déformation de la matière autrement que le retournement provoqué par le boxage.

Tandis que la chaleur des inserts **13** maintient (ou élève) la température de matière de l'excroissance **4,** on initie alors l'opération de boxage, par laquelle chaque excroissance **4** est repoussée transversalement par la translation de l'insert **13** correspondant pour former, par retournement autour de la charnière **14,** une réserve 5 en creux en saillie vers l'intérieur du récipient **2.**

Une fois le retournement des excroissances **4** achevé, on commande simultanément la dépressurisation (par mise à l'air libre) de l'intérieur du récipient **3,** et la dépressurisation (par mise à l'air libre ou par mise en communication avec le silencieux) de la chambre **36** de compensation (et donc de l'évidement **15)** via la canalisation **41.** L'évacuation de l'air est accompagné d'une détente endothermique qui contribue à refroidir - et donc à rigidifier - le récipient, et plus particulièrement les réserves **5.**

En variante, les moyens d'injection du fluide sous pression dans l'évidement **15** peuvent être prévus directement dans le dispositif **12** de boxage. À cet effet, celui-ci peut être muni d'un circuit **42** d'injection comprenant une canalisation **43** d'amenée percée dans la platine **16,** raccordée à un alésage **44** pratiqué dans la tige **19** centrale et aboutissant, à une extrémité **45** distale, dans l'insert **13.** Cette extrémité **45** est raccordée à deux canaux **46** secondaires qui débouchent sur la surface **31** frontale de l'insert **13.**

Un raccord **26** supplémentaire, monté sur la platine **16,** permet de raccorder, via une tubulure souple **47,** le circuit **42** à une source de gaz sous pression, dans les mêmes conditions qu'indiquées précédemment pour la canalisation **43.** Ainsi, il est préférable de raccorder le circuit **42** à la tuyère cloche **29,** de sorte à permettre un équilibrage automatique des pressions dans l'ébauche **3** et l'évidement **15.**

## Revendications

1. Procédé de formage, dans un moule **(6)** muni d'une paroi **(7)** formant une cavité **(9),** d'un récipient **(2)** à partir d'un récipient **(3)** intermédiaire comprenant au moins une excroissance **(4)** latérale en saillie vers l'extérieur du récipient, qui comprend :
- Une opération de boxage consistant à repousser l'excroissance **(4)** latérale, au moyen d'un insert **(13)** monté mobile par rapport au moule **(6)** entre une position rétractée dans laquelle l'insert est escamoté dans un évidement **(15)** formé dans la paroi **(7)** et une position sortie dans laquelle l'insert **(13)** s'étend en saillie par rapport à la paroi **(7),** pour former, par retournement, une réserve **(5)** en creux en saillie vers l'intérieur du récipient **(2) ;**
- Une opération de pressurisation du récipient **(3)** intermédiaire, consistant, préalablement à l'opération de boxage, à injecter un fluide sous pression dans le récipient **(3)** intermédiaire ;
**Caractérisé en ce qu'**il comprend :
- une opération de pressurisation locale consistant, préalablement à l'opération de boxage, à injecter un fluide sous pression dans un volume défini dans ledit évidement **(15)** entre l'excroissance **(4)** latérale et l'insert **(13).**

2. Procédé selon la revendication 1, **caractérisé en ce que** les opérations de pressurisation du récipient **(3)** intermédiaire et de pressurisation locale de l'évidement **(15)** sont conduites simultanément.

3. Procédé selon la revendication 1 ou 2, qui comprend une opération de dépressurisation simultanée de l'intérieur du récipient **(2)** et de l'évidement **(15).**

4. Procédé selon l'une des revendications 1 à 3, **caractérisé en ce que** le fluide employé lors des opérations de pressurisation est de l'air sous pression.

5. Procédé selon la revendication 4, **caractérisé en ce que** la pression de l'air est comprise entre 10 bar et 30 bars.

6. Dispositif **(1)** pour le formage d'un récipient **(2)** à partir d'un récipient **(3)** intermédiaire comprenant au moins une excroissance **(4)** latérale en saillie vers l'extérieur du récipient, ce dispositif comprenant :
- Un moule **(6)** muni d'une paroi **(7)** définissant une cavité **(9) ;**
- Un insert **(13)** de boxage monté mobile par rapport au moule **(6)** entre une position rétractée dans laquelle l'insert est escamoté dans un évidement **(15)** formé dans la paroi **(7)** et une position sortie dans laquelle l'insert **(13)** s'étend en saillie par rapport à la paroi **(7),** pour former, par retournement, une réserve **(5)** en creux en saillie vers l'intérieur du récipient **(2) ;**
- des moyens **(29)** d'injection d'un fluide sous pression dans le récipient **(3)** intermédiaire ;
**Caractérisé en ce qu'**il comprend :
- des moyens **(32 ; 42)** d'injection d'un fluide sous pression dans ledit évidement **(15).**

7. Dispositif **(1)** selon la revendication 6, **caractérisé en ce que** les moyens d'injection de fluide dans l'évidement **(15)** comprennent un alésage **(32)** pratiqué dans la paroi **(7)** et débouchant dans l'évidement **(15).**

8. Dispositif selon la revendication 6 ou 7, **caractérisé en ce qu'**il comprend un porte-moule **(10)** auquel est fixé le moule **(6),** et **en ce qu'**un circuit **(41)** d'évacuation du fluide de l'évidement **(15)** est aménagé dans le porte-moule **(10).**

9. Dispositif selon la revendication 8, **caractérisé en ce que** ledit circuit d'évacuation comprend une chambre **(36)** de compensation ménagée dans le porte-moule **(10)** et une canalisation **(41)** aménagée dans le porte-moule et débouchant dans la chambre de compensation **(36).**

10. Machine de fabrication de récipients, comprenant un dispositif selon l'une des revendications 6 à 9.

## Claims

1. Method for forming, in a mould (6) provided with a wall (7) that forms a cavity (9), a container (2) starting from an intermediate container (3) comprising at least one lateral outgrowth (4) projecting towards the outside of the container, which comprises:
- a boxing operation that consists in pushing against the lateral outgrowth (4), using an insert (13) that is mounted such that it can move with respect to the mould (6) between a retracted position in which the insert is retracted into a recess (15) formed in the wall (7) and a deployed position in which the insert (13) projects out from the wall (7), to form, by inversion, a hollow reservation (5) projecting towards the inside of the container (2);
- an operation of pressurizing the intermediate container (3) which consists, prior to the boxing operation, in injecting a fluid under pressure into the intermediate container (3);
**characterized in that** it comprises:
- a local-pressurization operation which consists, prior to the boxing operation, in injecting a fluid under pressure into a volume defined in said recess (15) between the lateral outgrowth (4) and the insert (13).

2. Method according to Claim 1, **characterized in that** the operations of pressurizing the intermediate container (3) and locally pressurizing the recess (15) are performed simultaneously.

3. Method according to Claim 1 or 2, which comprises an operation of simultaneously depressurizing the inside of the container (2) and the recess (15).

4. Method according to one of Claims 1 to 3, **characterized in that** the fluid used during the pressurizing operations is air under pressure.

5. Method according to Claim 4, **characterized in that** the pressure of the air is between 10 bar and 30 bar.

6. Device (1) for forming a container (2) starting from an intermediate container (3) comprising at least one lateral outgrowth (4) projecting towards the outside of the container, this device comprising:
- a mould (6) provided with a wall (7) defining a cavity (9);
- a boxing insert (13) mounted such that it can move with respect to the mould (6) between a retracted position in which the insert is retracted into a recess (15) formed in the wall (7) and a deployed position in which the insert (13) projects out from the wall (7), to form, by inversion, a hollow reservation (5) projecting towards the inside of the container (2);
- means (29) for injecting a fluid under pressure into the intermediate container (3);
**characterized in that** it comprises:
- means (32; 42) for injecting a fluid under pressure into the said recess (15).

7. Device (1) according to Claim 6, **characterized in that** the means for injecting fluid into the recess (15) comprise a bore (32) made in the wall (7) and opening into the recess (15).

8. Device according to Claim 6 or 7, **characterized in that** it comprises a mould holder (10) to which the mould (6) is fixed, and **in that** a circuit (41) for discharging the fluid from the recess (15) is formed in the mould holder (10).

9. Device according to Claim 8, **characterized in that** the said discharge circuit comprises a compensation chamber (36) formed in a mould holder (10) and a duct (41) formed in the mould holder and opening into the compensation chamber (36).

10. Machine for manufacturing components comprising a device according to one of Claims 6 to 9.

## Patentansprüche

1. Verfahren zum Formen in einem Formwerkzeug (6), das mit einer einen Hohlraum (9) formenden Wand (7) versehen ist, eines Behälters (2) ausgehend von einem Zwischenbehälter (3), der mindestens eine seitliche Ausstülpung (4) enthält, die nach außerhalb des Behälters vorsteht, das enthält:
- einen Treibvorgang, der darin besteht, die seitliche Ausstülpung (4) mittels eines Einsatzes (13) zurückzudrücken, der bezüglich des Formwerkzeugs (6) zwischen einer eingezogenen Stellung, in der der Einsatz in eine in der Wand (7) geformte Aussparung (15) eingefahren ist, und einer ausgetretenen Stellung beweglich montiert ist, in der der Einsatz (13) sich bezüglich der Wand (7) vorstehend erstreckt, um durch Umstülpen eine vertiefte Reserve (5) zu formen, die ins Innere des Behälters (2) vorsteht;
- einen Vorgang der Druckbeaufschlagung des Zwischenbehälters (3), der vor dem Treibvorgang darin besteht, ein Druckfluid in den Zwischenbehälter (3) einzuspritzen;
**dadurch gekennzeichnet, dass** es enthält:
- einen Vorgang der lokalen Druckbeaufschlagung, der vor dem Treibvorgang darin besteht, ein Druckfluid in ein in der Aussparung (15) zwischen der seitlichen Ausstülpung (4) und dem Einsatz (13) definiertes Volumen einzuspritzen.

2. Verfahren nach Anspruch 1, **dadurch gekennzeichnet, dass** die Vorgänge der Druckbeaufschlagung des Zwischenbehälters (3) und der lokalen Druckbeaufschlagung der Aussparung (15) gleichzeitig durchgeführt werden.

3. Verfahren nach Anspruch 1 oder 2, das einen Vorgang der gleichzeitigen Druckentlastung des Inneren des Behälters (2) und der Aussparung (15) enthält.

4. Verfahren nach einem der Ansprüche 1 bis 3, **dadurch gekennzeichnet, dass** das bei den Druckbeaufschlagungsvorgängen verwendete Fluid Druckluft ist.

5. Verfahren nach Anspruch 4, **dadurch gekennzeichnet, dass** der Druck der Luft zwischen 10 Bar und 30 Bar liegt.

6. Vorrichtung (1) zum Formen eines Behälters (2) ausgehend von einem Zwischenbehälter (3), der mindestens eine seitliche Ausstülpung (4) enthält, die nach außerhalb des Behälters vorsteht, wobei diese Vorrichtung enthält;
- ein Formwerkzeug (6), das mit einer Wand (7) versehen ist, die einen Hohlraum (9) definiert;
- einen Treibeinsatz (13), der bezüglich des Formwerkzeugs (6) zwischen einer eingezogenen Stellung, in der der Einsatz in eine in der Wand (7) geformte Aussparung (15) eingefahren ist, und einer ausgetretenen Stellung beweglich montiert ist, in der der Einsatz (13) sich bezüglich der Wand (7) vorstehend erstreckt, um durch Umstülpen eine vertiefte Reserve (5) zu formen, die ins Innere des Behälters (2) vorsteht;
- Einrichtungen (29) zum Einspritzen eines Druckfluids in den Zwischenbehälter (3);
**dadurch gekennzeichnet, dass** sie enthält:
- Einrichtungen (32; 42) zum Einspritzen eines Druckfluids in die Aussparung (15).

7. Vorrichtung (1) nach Anspruch 6, **dadurch gekennzeichnet, dass** die Einrichtungen zum Einspritzen von Fluid in die Aussparung (15) eine Bohrung (32) enthalten, die in der Wand (7) ausgeführt ist und in die Aussparung (15) mündet.

8. Vorrichtung nach Anspruch 6 oder 7, **dadurch gekennzeichnet, dass** sie einen Formwerkzeugträger (10) enthält, an dem das Formwerkzeug (6) befestigt ist, und dass ein Kreislauf (41) zur Abfuhr des Fluids von der Aussparung (15) im Formorerkzeugträger (10) eingerichtet ist.

9. Vorrichtung nach Anspruch 8, **dadurch gekennzeichnet, dass** der Abfuhrkreislauf eine Kompensationskammer (36), die im Formwerkzeugträger (10) angeordnet ist, und eine Rohrleitung (41) enthält, die im Formwerkzeugträger eingerichtet ist und in die Kompensationskammer (36) mündet.

10. Maschine zur Herstellung von Behältern, die eine Vorrichtung nach einem der Ansprüche 6 bis 9 enthält.
